# EUROPÄISCHE PATENTSCHRIFT

(11) **EP 2 364 914 B1**
(45) Veröffentlichungstag und Bekanntmachung des Hinweises auf die Patenterteilung: **24.04.2013**
(21) Anmeldenummer: 11157183.2
(22) Anmeldetag: 07.03.2011
(51) Int. Cl.: B65B 59/00, B65B 51/30, B29C 65/74, B65B 9/02, B65B 59/02, B29C 65/18

(54) **Breitenverstellbarer Unterstempel**
Width-adjustable lower punch
Poinçon inférieur réglable en largeur

(30) Priorität: 08.03.2010 DE 102010010677
(43) Veröffentlichungstag der Anmeldung: 14.09.2011
(73) Patentinhaber: Beck Packautomaten GmbH & Co. KG, 72636 Frickenhausen (DE)
(72) Erfinder: Beck-Deharde, Beate, 72622 Nürtingen (DE)
(74) Vertreter: Witte, Weller & Partner

(56) Entgegenhaltungen:
- CH-A- 478 279
- DE-A1-102006 017 088
- US-A- 2 541 696

## Beschreibung

Die vorliegende Erfindung betrifft einen Unterstempel für eine Quertrennschweißeinrichtung einer Folienverpackungsmaschine, mit einer Druckaufnahmeeinrichtung, wobei ein Stempelabschnitt der Druckaufnahmeeinrichtung eine Gegenkante für einen Oberstempel bildet, und einer Stützeinrichtung, wobei ein Stützabschnitt der Stützeinrichtung den Stempelabschnitt stützt.

Ein solcher Unterstempel ist etwa aus der Druckschrift DE 20 2006 014 892 U1 bekannt. Ein Stempel mit veränderbarem Format ist auch aus DE 10 2006 017 088 A1 bekannt.

Verpackungsmaschinen werden in vielen industriellen Anwendungen zum Verpacken von unterschiedlichen Packgütern verwendet. Bei den Packgütern kann es sich um Konsumartikel wie beispielsweise Datenträger, Bücher oder übliche, in Supermärkten vertriebene Artikel handeln, aber auch um Sonderartikel wie beispielsweise Ersatzteile. Auch bei Zeitschriften mit Beiliegern oder im Bereich des Versandhandels finden Verpackungsmaschinen regelmäßig Anwendung.

Die vorliegende Erfindung beschäftigt sich in erster Linie mit Folienverpackungsmaschinen, bei denen grundsätzlich zwischen Formschultermaschinen, Serienpackmaschinen und Banderoliermaschinen unterschieden wird. Während Formschultermaschinen und Serienpackmaschinen dazu vorgesehen sind, ein Packgut vollständig in Folie einzuhüllen, wird mittels einer Banderoliermaschine lediglich eine Banderole um ein zu verpackendes Packgut gelegt.

Unter "Verpackungsmaschine" sind im Rahmen der vorliegenden Erfindung somit alle der voranstehend genannten Arten von Verpackungsmaschinen zu verstehen. Unter dem Begriff "Umverpackung" sind sowohl das Packgut vollständig einhüllende Folienverpackungen zu verstehen, die zum einen als Halbschläuche und zum anderen auch in Form von separaten Folien zugeführt werden können.

Allen Verpackungsmaschinen ist gemein, dass die Umverpackung an zumindest einer Seite verschweißt und abgetrennt werden muss. Für Banderolen ist dies in der Regel lediglich an einer Seite der Fall, bei Formschultermaschinen an drei Seiten und bei Serienpackmaschinen an allen vier Seiten des Packguts. Verpackungsmaschinen weisen daher stets eine sogenannte Quertrennschweißvorrichtung auf, die die Umverpackung quer zur Transportrichtung des Packguts in der Verpackungsmaschine verschweißt und zumindest teilweise durchtrennt. Des Weiteren weisen Verpackungsmaschinen Längsschweißvorrichtungen bzw. Längstrennschweißvorrichtungen auf, die die Umverpackung parallel zu der Transportrichtung des Packguts verschweißen und einen eventuell vorhandenen Folienüberstand abtrennen. Der Folienüberstand wird dann in der Regel mittels einer Folienrückführung aufgefangen und wiederverwertet.

Verpackungsmaschinen sind nur selten für lediglich ein bestimmtes Packgut hergestellt. Üblicherweise sollen Verpackungsmaschinen dazu in der Lage sein, Packgüter unterschiedlicher Dimensionen verarbeiten zu können. Die Packgüter unterscheiden sich dabei zum einen in ihrer Breite und zum anderen in ihrer Höhe. Entsprechend wurde vorgeschlagen, die Längsschweißvorrichtung der Verpackungsmaschine verstellbar auszuführen, um die Verpackungsmaschine an unterschiedliche Packgüter anpassen zu können.

Bei Formschultermaschinen, die lediglich eine Formschulter sowie eine in ihrer Position festgelegte Längsschweißvorrichtung aufweisen, ist dabei lediglich die Formschulter relativ zu der Längsschweißvorrichtung bewegbar auszugestalten.

Bei Serienpackmaschinen, in denen zwei Längsschweißvorrichtungen vorgesehen sind, kann vorgesehen sein, dass eine Längsschweißvorrichtung festgelegt ist und die entsprechend andere Längsschweißvorrichtung bewegt wird, oder aber es kann vorgesehen sein, dass beide Längsschweißvorrichtungen symmetrisch zu einer Mittelebene bewegt werden. Da Serienpackmaschinen größtenteils symmetrisch zu dieser Mittelebene aufgebaut sind, wird regelmäßig die symmetrische Verschiebung beider Längsschweißvorrichtungen gewählt, um diese Symmetrie nicht aufgeben zu müssen.

Eine solche breitenverstellbare Folienverpackungsmaschine ist beispielsweise aus der Druckschrift DE 10 2006 001 594 A1 bekannt.

Bei derartigen breitenverstellbaren Folienverpackungsmaschinen ist grundsätzlich vorgesehen, dass ein beheizter Oberstempel der Quertrennschweißvorrichtung für Packgüter verschiedener Breite nicht gewechselt wird. Gleichwohl darf eine Quertrennschweißung nicht immer auf derselben Breite erfolgen. Da die seitlichen Folienüberstände zur Förderung der Folienbahnen verwendet werden und diese Förderung zumindest bis an das Ende der Längstrennschweißvorrichtung erfolgt (in dem Fall, dass die Quertrennschweißvorrichtung vor der Längstrennschweißvorrichtung angeordnet ist), muss auch die Breite der Quertrennschweißnaht einstellbar sein.

Da die Längstrennschweißvorrichtungen in ihrem Breitenabstand zueinander verstellt werden, würde man, sofern die Breite der Quertrennschweißnaht gleich bleibt, die Seitenränder, die die Längstrennschweißvorrichtung zur Förderung verwendet, mit der Quertrennschweißvorrichtung durchtrennen. Die Breite, über die die Quertrennschweißvorrichtung die Folienbahnen durchtrennt, darf also nicht wesentlich größer als der Breitenabstand der Längstrennschweißvorrichtungen zueinander sein.

Um diesem Problem der Einstellung der Breite der Quertrennschweißvorrichtung auf möglichst einfache Weise zu begegnen, werden bisher Teflonlappen verwendet. Diese Teflonlappen werden zwischen die Folienbahnen und den Oberstempel platziert, wodurch die Folienbahnen vor dem trennschweißenden Oberstempel geschützt sind. Der Oberstempel und der Unterstempel der Quertrennschweißvorrichtung bewegen sich weiterhin auf der gesamten Breite aufeinander zu, die Folienbahnen sind jedoch jeweils außen durch einen Teflonlappen geschützt, so dass die Schneidkante des Oberstempels dort nicht auf die Folienbahnen wirken kann. Eine Trennschweißnaht und ein Durchtrennen der Folienbahnen wird somit nur in einem mittleren Abschnitt bewirkt, der nicht von den Teflonlappen bedeckt ist.

Bei diesem Vorgehen stellen die Teflonlappen selbstverständlich ein Verschleißteil dar, das nach einem gewissen Zeitraum durch die permanente Beanspruchung durch die beheizte Schneidkante oder den beheizten Schneiddraht des Oberstempels ausgetauscht werden muss.

Es ist daher eine Aufgabe der vorliegenden Erfindung, eine im Wesentlichen verschleißunabhängige Lösung bereitzustellen, mit der die Breite der Trennschweißnaht variiert werden kann.

Gemäß einem ersten Aspekt der Erfindung wird daher vorgeschlagen, den eingangs genannten Unterstempel dahingehend weiterzubilden, dass eine Breite des Stützabschnitts und des Stempelabschnitts einstellbar ist.

Die bisherigen Lösungen bauen darauf auf, dass die Breite sowohl des Oberstempels als auch des Unterstempels und damit auch die Breite der Schneidkante des Oberstempels und der Gegenkante des Unterstempels unverändert bleibt und lediglich eine Schweißwirkung mittels zwischengeschobener Elemente verhindert wird.

Vorliegend kann der Oberstempel ebenfalls unverändert bleiben, der Unterstempel wird in seiner wirksamen Breite jedoch verändert.

Unter "Breite" ist dabei eine Erstreckung normal zu der Folientransportrichtung und in der Folienebene zu verstehen. Eine "wirksame Breite" ist entsprechend der Bereich, über den eine Trennschweißnaht erzeugt wird.

Durch die Verstellbarkeit der Breite des Stützabschnitts und des Stempelabschnitts und damit der Breite der Gegenkante kann der beheizte Oberstempel auch nur über die Breite des Stützabschnitts und des Stempelabschnitts wirken, da ihm in den übrigen Bereichen ein Widerpart fehlt.

Eine Durchtrennung und Verschweißung der Folienbahnen erfolgt somit lediglich über die Breite des Stempelabschnitts. Diese Breite ist einstellbar und kann dann dem Abstand der Längstrennschweißvorrichtungen entsprechen. Wenn durch die Einstellung der Breite des Stempelabschnitts die Breite der Trennschweißnaht verringert wird, vergrößert sich automatisch die Breite der Folienüberstände an den Außenseiten. Nach wie vor können dann die Folienüberstände zum Transport der Folienbahnen verwendet und nach einem Durchlaufen der Längstrennschweißvorrichtungen abgeführt werden.

Gemäß einem zweiten Aspekt der Erfindung wird eine Quertrennschweißvorrichtung mit einem Unterstempel gemäß dem ersten Aspekt der Erfindung vorgeschlagen.

Gemäß einem dritten Aspekt der Erfindung wird eine Folienverpackungsmaschine mit einer Quertrennschweißvorrichtung gemäß dem zweiten Aspekt der Erfindung vorgeschlagen.

Die Quertrennschweißvorrichtung gemäß dem zweiten Aspekt der Erfindung und die Folienverpackungsmaschine gemäß dem dritten Aspekt der Erfindung weisen dieselben Vorteile wie der Unterstempel gemäß dem ersten Aspekt der Erfindung auf.

Die eingangs gestellte Aufgabe wird somit vollkommen gelöst.

In einer bevorzugten Weiterbildung des Unterstempels gemäß dem ersten Aspekt der Erfindung ist vorgesehen, dass eine Gesamterstreckung der Druckaufnahmeeinrichtung und der Stützeinrichtung fest ist.

Auf diese Weise wird erreicht, dass eine Oberfläche der Druckaufnahmeeinrichtung, die die Gegenkante bildet, keinerlei Änderungen zu unterziehen ist und eine die Gegenkante bildende Oberfläche der Druckaufnahmeeinrichtung daher durchgängig ausgebildet sein kann. Dies ermöglicht insbesondere eine Gegenkante ohne Unterbrechungen und Höhenänderungen, so dass eine gerade und durchgängige Gegenkante für den Oberstempel bereitgestellt werden kann, um eine fehlerlose Trennschweißnaht herstellen zu können.

In einer weiteren bevorzugten Weiterbildung ist vorgesehen, dass die Stützeinrichtung von einem Stützelement gebildet ist, das in mindestens einer Richtung eine bestimmte Biegesteifigkeit aufweist, wenn es zwischen einem ersten und einem zweiten Auflager zweiseitig gelagert ist, und in der Richtung im Wesentlichen biegeschlaff ist, wenn es einseitig gelagert ist.

Auf diese Weise wird der Druckaufnahmeeinrichtung durch das Stützelement zwischen dem ersten und dem zweiten Auflager eine Unterstützung bereitgestellt, um die durch den Oberstempel auf die Gegenkante ausgeübte Druckkraft aufzunehmen. Über das zweite Auflager hinaus kann das Stützelement dann biegeschlaff herabhängen und stellt folglich keinerlei Unterstützung für die Druckaufnahmeeinrichtung bereit. Insbesondere kann vorgesehen sein, dass die Druckaufnahmeeinrichtung derart flexibel ausgebildet ist, dass sie der Bewegung des Stützelements folgen kann, wenn die Druckaufnahmeeinrichtung mit dem Stützelement verbunden ist. Die Druckaufnahmeeinrichtung und das Stützelement hängen dann an den Außenseiten des Unterstempels schlaff herab, so dass hier keinerlei Gegenlager für den Oberstempel vorhanden ist und folglich auch keine Quertrennschweißung erfolgen kann.

Des Weiteren kann vorgesehen sein, dass der Unterstempel des Weiteren eine Spanneinrichtung mit mindestens einem ersten und einem zweiten Auflager zum Aufspannen des Stützabschnitts aufweist, wobei eine Entfernung zwischen dem ersten und dem zweiten Auflager einstellbar ist.

Mittels der Spanneinrichtung kann der Stützabschnitt auf besonders einfache Weise in seiner Breite verstellt werden, insbesondere wenn ein voranstehend beschriebenes Stützelement als Stützeinrichtung verwendet wird. Dadurch, dass die Entfernung zwischen dem ersten und zweiten Auflager eingestellt wird, bestimmt man gleichzeitig auch die Breite, über die das Stützelement eine bestimmte Biegesteifigkeit aufweist und auf der das Stützelement eine geeignete Unterstützung für die Gegenkante der Druckaufnahmeeinrichtung bereitstellt, um bei einem Zusammentreffen mit dem Oberstempel in diesem Bereich eine Trennschweißnaht zu erzeugen.

Bevorzugterweise ist vorgesehen, dass die Spanneinrichtung ein drittes Auflager aufweist, wobei eine Entfernung zwischen dem dritten und dem ersten Auflager einstellbar ist und wobei der Unterstempel symmetrisch ausgebildet ist und das erste Auflager in einer Symmetrieebene liegt.

Grundsätzlich kann der voranstehend beschriebene Unterstempel beispielsweise auch in einer Formschulter-Folienverpackungsmaschine eingesetzt werden. Bei derartigen Maschinen stellt sich das der Erfindung zugrunde liegende Problem nicht, da dort lediglich eine Längsseite der Folienverpackung zu verschweißen ist und die andere Längsseite entsprechend ortsfest verbleiben kann. Insofern besteht dort beispielsweise die Möglichkeit, Ober- und Unterstempel in ihrer Breitenposition einfach zu verschieben, so dass ein freies Ende mit der Breitenposition der Längstrennschweißvorrichtung übereinstimmt.

Selbstverständlich kann aber auch dort beispielsweise das erste Auflager an der Längsseite der Formschulter vorgesehen sein und dann der wirksame Bereich durch Einstellen des zweiten Auflagers erfindungsgemäß aufgespannt werden.

Bei Serienpackmaschinen, die symmetrisch zu einer Mittelebene aufgebaut sind, ist es jedoch notwendig, ein drittes Auflager vorzusehen, so dass durch eine relative Verstellung des zweiten und des dritten Auflagers symmetrisch zu dem in der Symmetrieebene vorgesehenen ersten Auflager eine entsprechende Einstellung der Breite des Stempelabschnitts möglich wird, bei der beide Enden des Stempelabschnitts aufeinander zu bzw. voneinander weg bewegt werden.

Es kann vorgesehen sein, dass die Druckaufnahmeeinrichtung eine Mehrzahl von Einzelsegmenten aufweist.

Mit seiner entsprechenden Verknüpfung der Einzelsegmente können so beispielsweise die geforderten Biegesteifigkeitseigenschaften des Stützelements bereitgestellt werden.

Des Weiteren kann vorgesehen sein, dass das erste Auflager von einem Schienenelement gebildet ist, dessen Breite eine Mindestbreite des Stützabschnitts und des Stempelabschnitts festlegt.

Auf diese Weise kann beispielsweise ein konstruktiv platzsparender Aufbau bereitgestellt werden. In der Regel weist die Folienverpackungsmaschine Transporteinrichtungen auf, um das Packgut in Transportrichtung durch die Folienverpackungsmaschine zu fördern. Diese Transporteinrichtungen sind in der Regel auf Schienenelementen gelagert, so dass an einem derartigen Schienenelement auch das erste Auflager gebildet werden könnte, ohne zusätzliche Bauelemente vorzusehen.

Des Weiteren kann vorgesehen sein, dass das zweite Auflager und/oder das dritte Auflager jeweils von einem an einem Ausleger angelenkten Rollenelement gebildet ist, wobei sich der Ausleger jeweils von dem ersten Auflager aus erstreckt.

Diese Ausführungsform stellt eine mögliche Ausgestaltung der Spannvorrichtung bereit. Die Ausleger können in Breitenrichtung verschieblich in dem ersten Auflager bzw. dem Schienenelement vorgesehen sein und auf diese Weise die Rollenelemente verschieben. Beispielsweise können die Ausleger einen Zahnstangenabschnitt aufweisen, in den eine Ausgangswelle eines Elektromotors eingreift. Mögliche weitere Antriebsvorrichtungen sind dem Fachmann bekannt. Die Rollenelemente ermöglichen eine reibungsfreie Aufspannung des Stützelements. Selbstverständlich können die Ausleger auf beliebige Art und Weise ausgebildet sein. Insbesondere können sie beispielsweise teleskopisch ausgebildet sein. Anstatt von Auslegern und Rollenelementen sind beispielsweise auch Schienenelemente denkbar, die das Stützelement bzw. die Stützeinrichtung flächig unterstützen.

Bei der Stützeinrichtung kann es sich vorzugsweise um eine Kabelkette handeln. Eine derartige Kabelkette kann die geforderten Eigenschaften bezüglich Biegesteifigkeit und Biegeschlaffheit bereitstellen. Derartige Kabelketten sind beispielsweise von der Firma "igus" zu erhalten. Ein beispielhaftes Produkt ist die igus® easy chain® Serie E14. Alternativ kann auch eine sogenannte Schubkette verwendet werden, wie sie etwa von der Firma "SERAPID" erhältlich sind. Beispielhafte Produkte sind die Schubketten "Typ 20", "Typ 40", "Typ 60" oder "Typ 90".

Bei der Folienverpackungsmaschine gemäß dem dritten Aspekt der Erfindung kann des Weiteren vorgesehen sein, dass der Unterstempel höhenverstellbar gelagert ist. Selbstverständlich kann ebenfalls der Oberstempel bzw. die gesamte Quertrennschweißvorrichtung höhenverstellbar gelagert sein. Da in der Regel die Längstrennschweißvorrichtung in diesem Fall ebenfalls breiten- sowie höhenverstellbar ausgeführt sein muss, kann die geforderte Höhenverstellbarkeit durch eine geeignete Anlenkung des Unterstempels bzw. der Quertrennschweißvorrichtung an die höhen- und breitenverstellbaren Gehäuseelemente der Längstrennschweißvorrichtung erfolgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der beanspruchten Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer erfindungsgemäßen Verpackungsmaschine,
- Fig. 2: eine detaillierte Seitenansicht des Bereichs um eine Stempellücke in der Verpackungsmaschine in Fig. 1, und
- Fig. 3: eine schematische Querschnittsansicht entlang einer Linie III-III in Fig. 2.

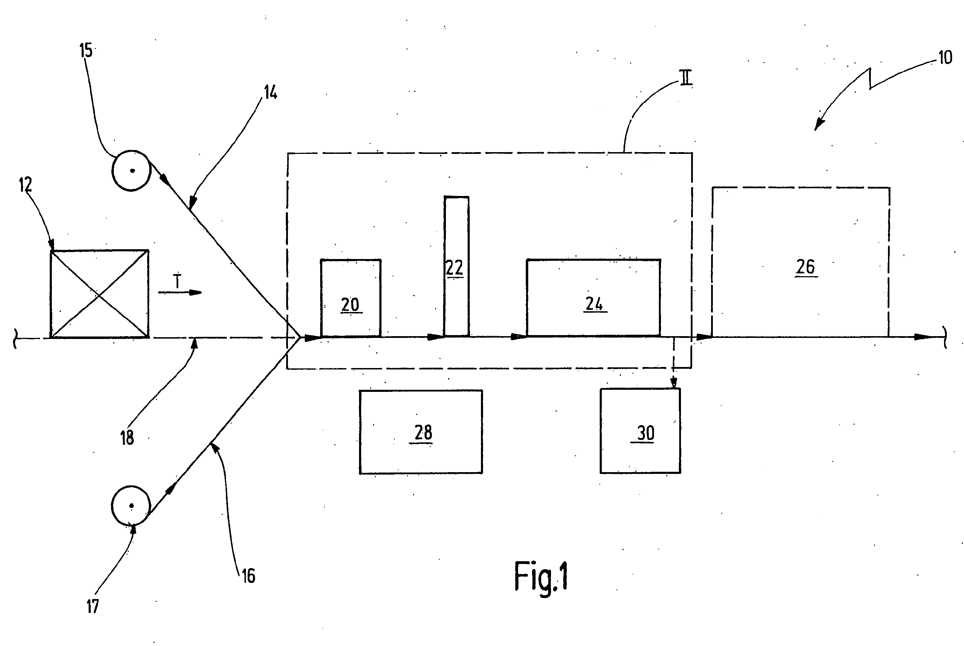

Fig. 1 zeigt eine Folienverpackungsmaschine 10 in einer schematischen Ansicht. Die Verpackungsmaschine 10 dient dazu, ein Packgut 12 mit einer Umverpackung zu versehen. Dazu wird das Packgut 12 in einer Transportrichtung T durch die Folienverpackungsmaschine 10 bewegt.

Das Packgut 12 wird von der Folienverpackungsmaschine 10 mit einer oberen Folienbahn 14, die von einer oberen Folienzuführung 15 abgewickelt wird, und einer unteren Folienbahn 16, die von einer unteren Folienzuführung 17 abgewickelt wird, eingehüllt. Diese Art der Einhüllung entspricht dem Prinzip einer sogenannten Serienpackmaschine, so dass dementsprechend die vorliegende Erfindung am Beispiel einer als Serienpackmaschine ausgestalteten Folienverpackungsmaschine 10 erläutert wird.

Die obere Folienbahn 14 und die untere Folienbahn 16 laufen in einer Folienebene 18 zusammen. Das Packgut 12 fährt somit in die aufeinander zulaufende obere Folienbahn 14 und untere Folienbahn 16 ein, wobei die Folienbahnen 14, 16 zunächst einer Querstraffung unterzogen werden.

Dazu ist eine Querstraffungsvorrichtung 20 vorgesehen. Die mögliche Ausgestaltung dieser Querstraffungsvorrichtung 20 wird mit Blick auf die folgenden Figuren noch näher erläutert. Das umhüllte Packgut 12 mit den quer gestrafften Folienbahnen 14, 16 erreicht eine Quertrennschweißvorrichtung 22. Die Quertrennschweißvorrichtung 22 schweißt die Folienbahnen 14, 16 quer zu der Transportrichtung T zusammen und durchtrennt die Folienbahnen 14, 16 zumindest teilweise, so dass das Packgut 12 entlang der Schweißnaht keinen Kontakt mehr zu dem ihm vorhergehenden Packgut 12 hat.

Anschließend fährt das Packgut 12 durch eine Längstrennschweißvorrichtung 24, das dazu vorgesehen ist, die Folienbahnen 14, 16 seitlich des Packguts 12 zusammenzuschweißen und einen seitlichen Folienüberstand abzutrennen. Schließlich wird die entgegengesetzt zu der Transportrichtung T weisende Seite des Packguts 12 erneut von der Quertrennschweißvorrichtung 22 verschweißt und abgetrennt. Das Packgut 12 ist nun an allen vier Seiten verschweißt und beschnitten, so dass das Packgut 12 von einer Folienumhüllung komplett umgeben ist.

Die Abfolge der Quertrennschweißvorrichtung 22, der Längstrennschweißvorrichtung 24 und der Querstraffungsvorrichtung 20 ist lediglich beispielhaft in einer häufig auftretenden Konfiguration wiedergegeben. Die Abfolge dieser Vorrichtungen kann auch anders sein, beispielsweise kann vorgesehen sein, die Quertrennschweißvorrichtung 22 nach der Längstrennschweißvorrichtung 24 anzuordnen. Auch können Elemente der Querstraffungsvorrichtung 20 zwischen oder in der Quertrennschweißvorrichtung 22 oder der Längstrennschweißvorrichtung 24 vorgesehen sein.

Es kann vorgesehen sein, dass sich dann ein Schrumpftunnel 26 anschließt, der auf eine bestimmte Temperatur erwärmt ist und die Folienbahnen 14, 16 auf das Packgut 12 aufschrumpft, so dass die Folienbahnen 14, 16 das Packgut 12 fest und ohne Spiel umschließen. Der Verpackungsvorgang ist dann abgeschlossen.

Das Vorhandensein eines Schrumpftunnels 26 hängt grundsätzlich von den an die Verpackung gestellten Anforderungen ab. Ein Schrumpftunnel 26 muss insbesondere bei Serienpackmaschinen nicht zwingend vorhanden sein.

Des Weiteren weist die Folienverpackungsmaschine 10 in der Regel Verstelleinrichtungen 28 auf, um die Folienverpackungsmaschine 10 auf Packgüter unterschiedlicher Breite, Länge und Höhe einstellen zu können. Auch die Geschwindigkeit des Verpackungsvorgangs kann mittels der Verstelleinrichtungen 28 eingestellt werden. Des Weiteren sind Möglichkeiten vorgesehen, die Folienverpackungsmaschine 10 auf unterschiedliche Folientypen, die beispielsweise in Dicke, Reißfestigkeit und Oberflächenbeschaffenheit voneinander abweichen können, einzustellen.

Letztlich ist in der Regel eine Folienrückführung 30 vorgesehen, die von der Längstrennschweißvorrichtung 24 abgetrenntes überschüssiges Folienmaterial sammelt, um es beispielsweise einem Recyclingprozess zuzuführen.

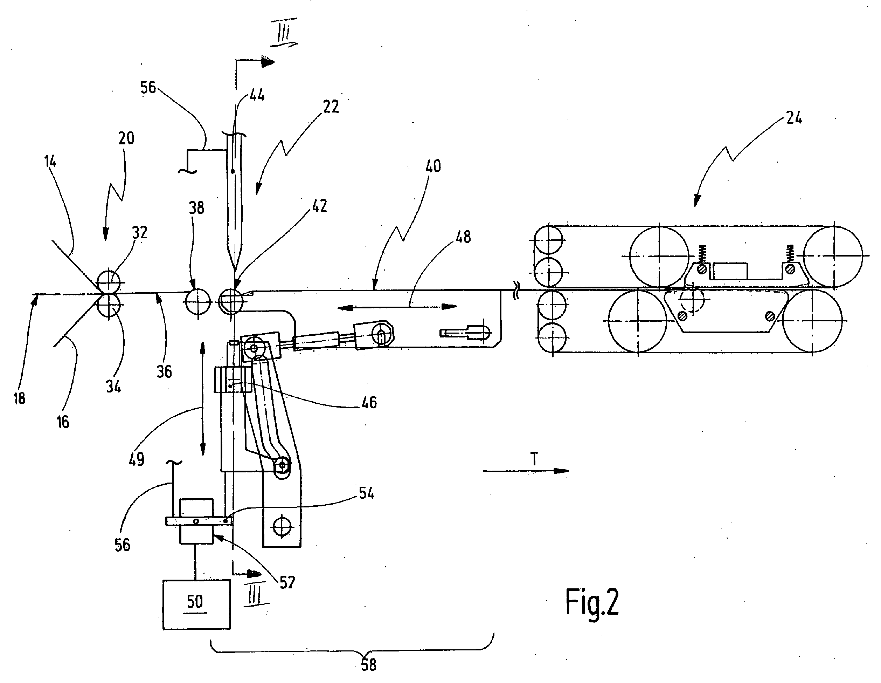

Mit II ist ein Ausschnitt der Folienverpackungsmaschine 10 bezeichnet, der in Fig. 2 in einer Detailansicht dargestellt ist.

Die in der Fig. 2 dargestellte Detailansicht umfasst die Querspannungsvorrichtung 20, die Quertrennschweißvorrichtung 22 und die Längstrennschweißvorrichtung 24.

Die Querspannungsvorrichtung 20 weist in der Regel ein oberes Querspannrad 32 und ein unteres Querspannrad 34 auf, die die obere Folienbahn 14 und die untere Folienbahn 16 zwischen sich einziehen und in einer Querrichtung, d.h. senkrecht zu der Transportrichtung T spannen. Dabei ist in der Regel vorgesehen, dass die Querspannräder 32, 34 mit ihrer Drehachse leicht nach außen geneigt sind.

Eine erste Transporteinrichtung 36 fördert das zu verpackende Packgut auf der Folienebene 18 bis zu der Quertrennschweißvorrichtung 22. Dort endet die erste Transporteinrichtung 36 in einer ersten Umlenkrolle 38. An die erste Transporteinrichtung 36 schließt sich eine zweite Transporteinrichtung 40 an, die das Packgut 12 von der Quertrennschweißvorrichtung 22 zu der Längstrennschweißvorrichtung 24 fördert. Die Längstrennschweißvorrichtung 24 und der Übergang von der zweiten Transporteinrichtung 40 zu der Längstrennschweißvorrichtung 24 ist lediglich schematisch dargestellt und kann beliebig ausgestaltet sein.

Die zweite Transporteinrichtung 40 beginnt mit einer zweiten Umlenkrolle 42, die sehr nahe an die erste Umlenkrolle 38 in einer ersten Position herangefahren ist. Diese erste Position ist in der Fig. 2 dargestellt und soll diejenige Position bezeichnen, in der eine zwischen der ersten Umlenkrolle 38 und der zweiten Umlenkrolle 42 vorhandene Stempellücke minimiert ist.

Die Quertrennschweißvorrichtung 22 weist einen Oberstempel 44 und einen Unterstempel 46 auf. Der Oberstempel 44 und der Unterstempel 46 sind aufeinander zu bewegbar, um die obere Folienbahn 14 und die untere Folienbahn 16 zumindest teilweise zu durchtrennen und zu verschweißen.

In der in Fig. 2 dargestellten ersten Position ist dies jedoch nicht möglich, da die Stempellücke geschlossen ist. Der Oberstempel 44 und der Unterstempel 46 können sich nicht treffen, da sich die zweite Umlenkrolle 42 zwischen ihnen befindet.

Daher ist die zweite Transporteinrichtung 40 in horizontaler Richtung, d.h. parallel zu der Folienebene 18 bewegbar. Diese Bewegung ist durch einen Pfeil 48 verdeutlicht.

Der Unterstempel 46 wiederum bewegt sich entlang einer mit einem Pfeil 49 verdeutlichten Richtung. In einem Betriebszustand der Folienverpackungsmaschine 10 verläuft die Richtung 48 horizontal und die Richtung 49 vertikal. Die Richtung 48 erstreckt sich gemäß der im Rahmen der vorliegenden Beschreibung verwendeten Terminologie in Richtung einer "Länge" der Folienverpackungsmaschine 10 bzw. eines ihrer Elemente. Die Richtung 49 bezeichnet entsprechend eine "Höhe". Senkrecht zu der Richtung 48 und der Richtung 49 erstreckt sich folglich eine "Breite" der Folienverpackungsmaschine 10 bzw. des Unterstempels 46.

Um die Bewegungen zu bewirken, ist eine Antriebseinrichtung 50 vorgesehen. Die Antriebseinrichtung 50 ist in Fig. 2 lediglich schematisch dargestellt. Es kann sich um eine beliebige Einrichtung handeln, vorzugsweise ist ein Servomotor oder ein anderer geeigneter Elektromotor vorgesehen, um die Bewegungen zu bewirken.

Dazu treibt die Antriebseinrichtung 50 einen zweiseitigen Hebel bzw. Doppelhebel 52 an, der zum einen einen ersten Hebel 54 aufweist, der an den Unterstempel 46 angelenkt ist und zum anderen einen zweiten Hebel 56 aufweist, der an den Oberstempel 44 angelenkt ist. Auf diese Weise kann mittels einer durch die Antriebseinrichtung 50 bewirkten Drehung des Doppelhebels 52 sowohl eine Bewegung des Unterstempels in einer Richtung 49 nach oben als auch eine Bewegung des Oberstempels 44 in einer Richtung 49 nach unten bewirkt werden.

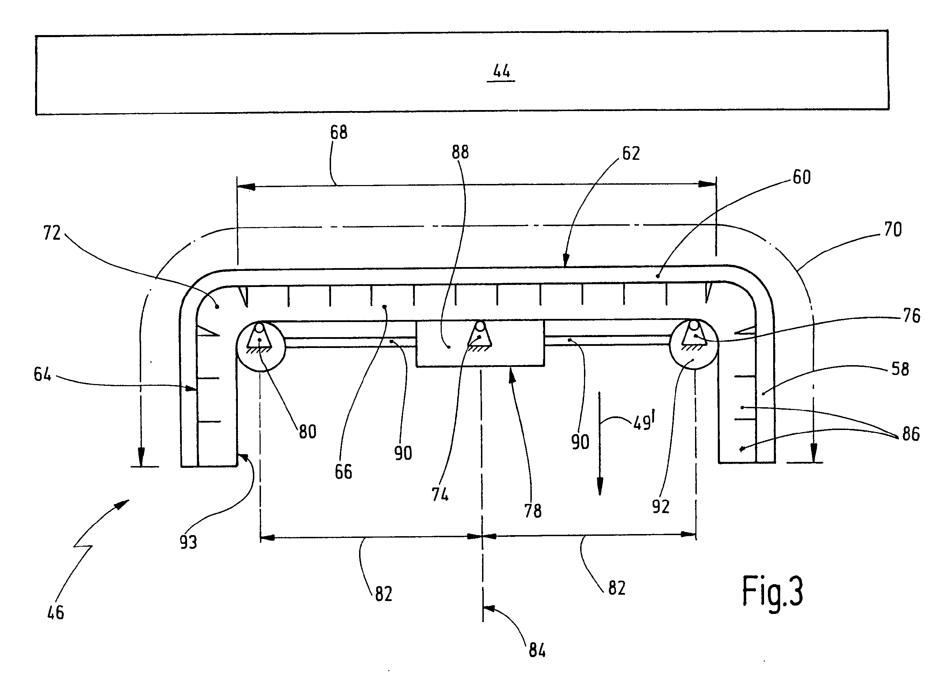

Fig. 3 zeigt eine schematische Querschnittsansicht entlang der Linie III-III in Fig. 2.

Dargestellt ist insbesondere eine Ausführungsform des Unterstempels 46.

Der Unterstempel 46 weist eine Druckaufnahmeeinrichtung 58 auf, die dazu vorgesehen ist, ein Widerlager für den Oberstempel 44 zu bilden. Der Oberstempel 44 ist lediglich als Blockelement dargestellt, da es auf seine genaue Ausgestaltung nicht ankommt. Aus Übersichtsgründen nicht dargestellt ist die zweite Umlenkrolle 42, die sich bei geschlossener Stempellücke zwischen dem Oberstempel 44 und dem Unterstempel 46 befinden kann.

Die Druckaufnahmeeinrichtung 58 weist einen Stempelabschnitt 60 auf, der eine Gegenkante 62 ausbildet, die den durch den Oberstempel 44 ausgeübten Druck aufnimmt, so dass die obere Folienbahn 14 und die untere Folienbahn 16 aufeinandergedrückt und miteinander verschweißt werden. Die Druckaufnahmeeinrichtung 58 kann beispielsweise ein Silikon- oder Gummielement sein, das selbst keine bzw. nur eine sehr geringe Biegesteifigkeit aufweist. Daher ist eine Stützeinrichtung 64 vorgesehen, die die Druckaufnahmeeinrichtung 58 stützt, so dass eine in die Richtung 49' von dem Oberstempel 44 ausgeübte Kraft aufgenommen werden kann.

Entsprechend weist die Stützeinrichtung 64 einen Stützabschnitt 66 auf, der in seiner Breite dem Stempelabschnitt 60 entspricht. Eine Breite des Stützabschnitts 66 und des Stempelabschnitts 60 ist mit einem Bezugszeichen 68 bezeichnet. Dieses ist die "wirksame" Breite der Druckaufnahmeeinrichtung 58, da nur über diese Breite 68 eine Trennschweißnaht erzeugt wird. Eine Gesamterstreckung 70 der Druckaufnahmeeinrichtung 58 und der Stützeinrichtung 64 ist jedoch größer. Dies ist bedingt durch die besondere Ausgestaltung des Stützelements 72, das über die Breite 68 derart gelagert ist, dass es eine ausreichend hohe Biegesteifigkeit aufweist, so dass die Gegenkante 62 zur Aufnahme der in die Richtung 49' weisenden Kraft von dem Oberstempel 44 gestützt ist. Darüber hinaus ist das Stützelement 72 jedoch biegeschlaff und kann lose herunterhängen. Alternativ ist auch denkbar, das überhängende Ende des Stützelements 72 aufzuwickeln oder von dem Oberstempel 44 weg zu spannen. Außerhalb der Breite 68 ist somit kein geeignetes Widerlager für den Oberstempel 44 vorhanden, so dass dort keine Trennschweißnaht erzeugt wird.

Entsprechend sind ein erstes Auflager 74 und ein zweites Auflager 76 vorgesehen, die eine Spanneinrichtung 78 bilden, um das Stützelement 72 aufzuspannen. Im vorliegenden Fall wird eine Serienpackmaschine als Folienverpackungsmaschine 10 vorgesehen, so dass ein drittes Auflager 80 vorgesehen ist, das das Stützelement 72 auf einer dem zweiten Auflager 76 entgegengesetzten Seite zusammen mit dem ersten Auflager 74 aufspannt.

Eine Entfernung 82 zwischen dem ersten Auflager 74 und dem zweiten Auflager 76 sowie zwischen dem ersten Auflager 74 und dem dritten Auflager 80 ist mittels der Spanneinrichtung 78 einstellbar. Die Spanneinrichtung 78 ist folglich bezüglich einer Symmetrieebene 84 symmetrisch ausgebildet.

Auf diese Weise kann zusammen mit einer Breitenverstellung der übrigen Elemente, etwa der Längstrennschweißvorrichtung 24, eine Verstellung der wirksamen Breite erfolgen, über die die Quertrennschweißvorrichtung 22 die obere Folienbahn 14 und die untere Folienbahn 16 durchtrennt und miteinander verschweißt.

Das Stützelement 72 kann aus mehreren Einzelsegmenten 86 gebildet sein, so dass beispielsweise ein Kettenelement vorgesehen sein kann, wie es in anderen Bereichen der Technik als "Kabelkette" bekannt ist.

Das erste Auflager 74 ist durch ein Schienenelement 88 gebildet, das Teil eines Gehäuses der Folienverpackungsmaschine 10 sein kann, auf dem beispielsweise auch die erste Transporteinrichtung 36 und/oder die zweite Transporteinrichtung 40 abgestützt sind. Eine Breite des Schienenelements 88 gibt einen Mindestwert für die Breite 68 vor, da das zweite Auflager 76 und das dritte Auflager 80 nicht näher aufeinander zu bewegt werden können.

Die Einstellbarkeit des zweiten Auflagers 76 und des dritten Auflagers 80 kann über Ausleger 90 bereitgestellt werden, die in das Schienenelement 88 eingezogen bzw. aus diesem herausgefahren werden können. Dies kann beispielsweise mittels einer elektrischen Maschine (nicht dargestellt) erfolgen. Das erste Auflager 74 und das zweite Auflager 76 selbst können beispielsweise durch Rollenelemente 92 bereitgestellt werden, die an den Auslegern 90 angelenkt sind. Die Rollenelemente 92 rollen folglich an einer Unterseite 93 des Stützelements 72 ab, so dass dieses im Wesentlichen reibungsfrei aufgespannt und so die Breite 68 eingestellt werden kann.

Auf diese Weise wird eine Möglichkeit bereitgestellt, die Breite 68 der Trennschweißnaht einzustellen, ohne dass hierfür einem besonderen Verschleiß unterworfene Hilfsmittel vorzusehen sind.

## Patentansprüche

1. Unterstempel (46) für eine Quertrennschweißvorrichtung (22) einer Folienverpackungsmaschine (10), mit einer Druckaufnahmeeinrichtung (58), wobei ein Stempelabschnitt (60) der Druckaufnahmeeinrichtung (58) eine Gegenkante (62) für einen Oberstempel (44) bildet, und einer Stützeinrichtung (64), wobei ein Stützabschnitt (66) der Stützeinrichtung (64) den Stempelabschnitt (60) stützt, **dadurch gekennzeichnet, dass** eine Breite (68) des Stützabschnitts (66) und des Stempelabschnitts (60) einstellbar ist.

2. Unterstempel nach Anspruch 1, **dadurch gekennzeichnet, dass** eine Gesamterstreckung (70) der Druckaufnahmeeinrichtung (58) und/oder der Stützeinrichtung (64) fest ist.

3. Unterstempel nach Anspruch 1 oder 2, **dadurch gekennzeichnet, dass** die Stützeinrichtung (64) von einem Stützelement (72) gebildet ist, das in mindestens einer Richtung (49') eine bestimmte Biegesteifigkeit aufweist, wenn es zwischen einem ersten (74) und einem zweiten (76) Auflager zweiseitig gelagert ist, und in der Richtung (49') im wesentlichen biegeschlaff ist, wenn es einseitig gelagert ist.

4. Unterstempel nach einem der Ansprüche 1 bis 3, **dadurch gekennzeichnet, dass** der Unterstempel (46) des Weiteren eine Spanneinrichtung (78) mit mindestens einem ersten (74) und einem zweiten (76) Auflager zum Aufspannen des Stützabschnitts (66) aufweist, wobei eine Entfernung (82) zwischen dem ersten (74) und dem zweiten (76) Auflager einstellbar ist.

5. Unterstempel nach einem der Ansprüche 1 bis 3, **dadurch gekennzeichnet, dass** die Spanneinrichtung (78) ein drittes Auflager (80) aufweist, wobei eine Entfernung (82) zwischen dem dritten (80) und dem ersten Auflager (74) einstellbar ist, und wobei der Unterstempel (46) symmetrisch ausgebildet ist und das erste Auflager (74) in einer Symmetrieebene (84) liegt.

6. Unterstempel nach einem der Ansprüche 1 bis 5, **dadurch gekennzeichnet, dass** die Druckaufnahmeeinrichtung (58) eine Mehrzahl von Einzelsegmenten (86) aufweist.

7. Unterstempel nach Anspruch 5 oder 6, **dadurch gekennzeichnet, dass** das erste Auflager (80) von einem Schienenelement (88) gebildet ist, dessen Breite eine Mindestbreite des Stützabschnitts (66) und des Stempelabschnitts (60) festlegt.

8. Unterstempel nach einem der Ansprüche 1 bis 7, **dadurch gekennzeichnet, dass** das zweite Auflager (76) und/oder das dritte Auflager (80) jeweils von einem an einem Ausleger (90) angelenkten Rollenelement (92) gebildet ist, wobei sich der Ausleger (90) jeweils von dem ersten Auflager (74) aus erstreckt.

9. Unterstempel nach Anspruch 8, **dadurch gekennzeichnet, dass** der Ausleger (90) teleskopisch ausgebildet ist.

10. Unterstempel nach einem der Ansprüche 1 bis 9, **dadurch gekennzeichnet, dass** die Stützeinrichtung (64) eine Kabelkette oder eine Schubkette ist.

11. Quertrennschweißvorrichtung (22) mit einem Unterstempel (46) nach einem der Ansprüche 1 bis 10.

12. Folienverpackungsmaschine (10) mit einer Quertrennschweißvorrichtung nach Anspruch 11.

13. Folienverpackungsmaschine nach Anspruch 12, **dadurch gekennzeichnet, dass** der Unterstempel (46) höhenverstellbar gelagert ist.

## Claims

1. Lower punch (46) for a transverse separating/welding apparatus (22) of a film packaging machine (10), having a pressure receiving device (58), a punch section (60) of the pressure receiving device (58) forming an opposing edge (62) for an upper punch (44), and having a supporting device (64), a supporting section (66) of the supporting device (64) supporting the punch section (60), **characterized in that** a width (68) of the supporting section (66) and of the punch section (60) can be set.

2. Lower punch according to Claim 1, **characterized in that** an overall extent (70) of the pressure receiving device (58) and/or of the supporting device (64) is fixed.

3. Lower punch according to Claim 1 or 2, **characterized in that** the supporting device (64) is formed by a supporting element (72) which has a defined flexural stiffness in at least one direction (49') when it is mounted on two sides between a first (74) and a second (76) rest, and is substantially flexurally slack in the direction (49') when it is mounted on one side.

4. Lower punch according to one of Claims 1 to 3, **characterized in that** the lower punch (46) has, furthermore, a clamping device (78) with at least one first (74) and one second (76) rest for defining the supporting section (66), a distance (82) between the first (74) and the second (76) rest being adjustable.

5. Lower punch according to one of Claims 1 to 3, **characterized in that** the clamping device (78) has a third rest (80), a distance (82) between the third (80) and the first rest (74) being adjustable, and the lower punch (46) being of symmetrical configuration and the first rest (74) lying in a plane (84) of symmetry.

6. Lower punch according to one of Claims 1 to 5, **characterized in that** the pressure receiving device (58) has a plurality of individual segments (86).

7. Lower punch according to Claim 5 or 6, **characterized in that** the first rest (80) is formed by a rail element (88), the width of which fixes a minimum width of the supporting section (66) and of the punch section (60).

8. Lower punch according to one of Claims 1 to 7, **characterized in that** the second rest (76) and/or the third rest (80) are/is formed in each case by a roller element (92) which is articulated on an arm (90), the arm (90) extending in each case from the first rest (74).

9. Lower punch according to Claim 8, **characterized in that** the arm (90) is of telescopic configuration.

10. Lower punch according to one of Claims 1 to 9, **characterized in that** the supporting device (64) is a cable chain or a thrust chain.

11. Transverse separating/welding apparatus (22) having a lower punch (46) according to one of Claims 1 to 10.

12. Film packaging machine (10) having a transverse separating/welding apparatus according to Claim 11.

13. Film packaging machine according to Claim 12, **characterized in that** the lower punch (46) is mounted in a height-adjustable manner.

## Revendications

1. Poinçon inférieur (46) pour un dispositif de soudage-découpage transversal (22) d'une machine d'emballage en film (10), comprenant un dispositif de réception de pression (58), une portion de poinçon (60) du dispositif de réception de pression (58) formant une arête opposée (62) pour un poinçon supérieur (44), et un dispositif de support (64), une portion de support (66) du dispositif de support (64) supportant la portion de poinçon (60), **caractérisé en ce qu'**une largeur (68) de la portion de support (66) et de la portion de poinçon (60) peut être ajustée.

2. Poinçon inférieur selon la revendication 1, caractérisé en qu'une étendue totale (70) du dispositif de réception de pression (58) et/ou du dispositif de support (64) est fixe.

3. Poinçon inférieur selon la revendication 1 ou 2, **caractérisé en ce que** le dispositif de support (64) est formé par un élément de support (72) qui présente dans au moins une direction (49') une certaine rigidité en flexion, lorsqu'il est supporté sur deux côtés entre un premier (74) et un deuxième (76) appui, et qui est sensiblement flexible dans la direction (49') lorsqu'il est supporté sur un côté.

4. Poinçon inférieur selon l'une quelconque des revendications 1 à 3, **caractérisé en ce que** le poinçon inférieur (46) présente en outre un dispositif de serrage (78) avec au moins un premier (74) et un deuxième (76) appui, pour serrer la portion de support (66), une distance (82) entre le premier (74) et le deuxième (76) appui pouvant être ajustée.

5. Poinçon inférieur selon l'une quelconque des revendications 1 à 3, **caractérisé en ce que** le dispositif de serrage (78) présente un troisième appui (80), une distance (82) entre le troisième (80) et le premier (74) appui pouvant être ajustée, et le poinçon inférieur (46) étant réalisé sous forme symétrique et le premier appui (74) étant situé dans un plan de symétrie (84).

6. Poinçon inférieur selon l'une quelconque des revendications 1 à 5, **caractérisé en ce que** le dispositif de réception de pression (58) présente une pluralité de segments individuels (86).

7. Poinçon inférieur selon la revendication 5 ou 6, **caractérisé en ce que** le premier appui (80) est formé par un élément de rail (88), dont la largeur définit une largeur minimale de la portion de support (66) et de la portion de poinçon (60).

8. Poinçon inférieur selon l'une quelconque des revendications 1 à 7, **caractérisé en ce que** le deuxième appui (76) et/ou le troisième appui (80) sont à chaque fois formés par un élément de rouleau (92) articulé à un bras de potence (90), le bras de potence (90) s'étendant à chaque fois depuis le premier appui (74).

9. Poinçon inférieur selon la revendication 8, **caractérisé en ce que** le bras de potence (90) est réalisé sous forme télescopique.

10. Poinçon inférieur selon l'une quelconque des revendications 1 à 9, **caractérisé en ce que** le dispositif de support (64) est une chaîne de câble ou une chaîne de poussée.

11. Dispositif de soudage-découpage transversal (22) comprenant un poinçon inférieur (46) selon l'une quelconque des revendications 1 à 10.

12. Machine d'emballage en film (10) comprenant un dispositif de soudage-découpage transversal selon la revendication 11.

13. Machine d'emballage en film selon la revendication 12, **caractérisée en ce que** le poinçon inférieur (46) est monté de manière réglable en hauteur.
